# EUROPEAN PATENT SPECIFICATION

(11) **EP 2 093 574 B1**
(45) Date of publication and mention of the grant of the patent: **05.09.2012**
(21) Application number: 08151601.5
(22) Date of filing: 19.02.2008
(51) Int. Cl.: G01P 3/44

(54) **A combined rotation sensing and sealing device for bearings**
Kombinierte Vorrichtung zur Dreherfassung und Abdichtung von Lagern
Dispositif combiné de détection de la rotation et de scellement pour paliers

(43) Date of publication of application: 26.08.2009
(73) Proprietor: Aktiebolaget SKF, 415 50 Göteborg (SE)
(72) Inventor: Foti, Claudio, 10046 Poirino (Torino) (IT)
(74) Representative: Fioravanti, Corrado

(56) References cited:
- EP-A- 0 652 438
- EP-A- 0 949 510
- EP-A- 0 999 448
- EP-A- 1 160 492
- US-B1- 6 559 633

## Description

The present invention relates to a combined rotation sensing and sealing device for bearings, particularly for the hub of a motor vehicle wheel.

Sealing devices are known and are used in a wide range of applications. With bearings for the hubs of motor vehicle wheels it is known to use sealing devices for hermetically sealing the annular gap between the bearing races. Figure 1, extracted from EP-A-1 650 480, shows a cross sectional view of a conventional sealing device 10 which serves to seal an annular gap 11 between the races 12 and 13 of a bearing. The sealing device 10 comprises a first metallic annular shield 14 or "*flinger*" secured to the radially inner, stationary race 13 of the bearing and a second metallic annular shield 15 secured to the radially outer, rotating race 12. Fixed to the stationary shield 15 is a sealing gasket 16 of elastomeric material having two sealing lips 17, 18 slidingly engaging the opposite shield 14. The radial sealing lip 17 is engaged against a cylindrical axial portion 19 of the shield 14. Contact of the radial lip 17 is usually ensured by a circumferential spring 21.

In recent years there has been a tendency to integrate the sealing device with a magnetised encoder wheel which forms part of a device for sensing relative rotation between the bearing races. An example is given in EP-A-0 942 188. As shown in Figure 2, vulcanised on the radial wall 22 of a flinger 19 in a sealing device 14 is a magnetised rubber part 20a which constitutes an encoder wheel. As the flinger rotates, the encoder generates pulses of a frequency proportional to the rotational speed of the rotating bearing race in a fixed sensor facing the encoder from the outboard side of the vehicle. With this arrangement the sensor is subject to damage from pebbles and, more generally, contaminating agents from the road and the brakes. Moreover, the sensor requires a special mounting supported by a stationary part of the bearing.

Other patent publications propose to incorporate also the sensor in the sealing device:
EP-A-1 698 807 discloses a sensor embedded in a resin member joined to a metal insert which carries a sealing gasket at its free end;
US-B2-7 126 328 discloses a sensor encapsulated in a holder of synthetic resin and fitted through a bore in a metal insert that carries a sealing gasket;
   the sensor shown in EP-A-1 160 492 is embedded in a resin body located upon an annular insert which is made of metal or hard resin and carries a sealing gasket at its free end;
US-B2-6 918 596 shows a sensor attached to the metal insert supporting a sealing gasket. A magnetic encoder is submerged in the lubricant grease that fills the inner parts of the bearing.

It is a main object of the present invention to provide an improved combined sealing and rotation sensing device capable of simultaneously guaranteeing an excellent protection to its components and those of the associated bearing, while being of particularly compact design in order to meet the requirements of bearing and motor vehicle manufacturers.

The above and other objects and advantages, that will be better understood herein after, are attained according to the present invention by a combined device having the features defined in the appended claims.

The features and the advantages of the invention will appear from the detailed description of an embodiment thereof, given by way of example. Reference is made to the accompanying drawings, in which:

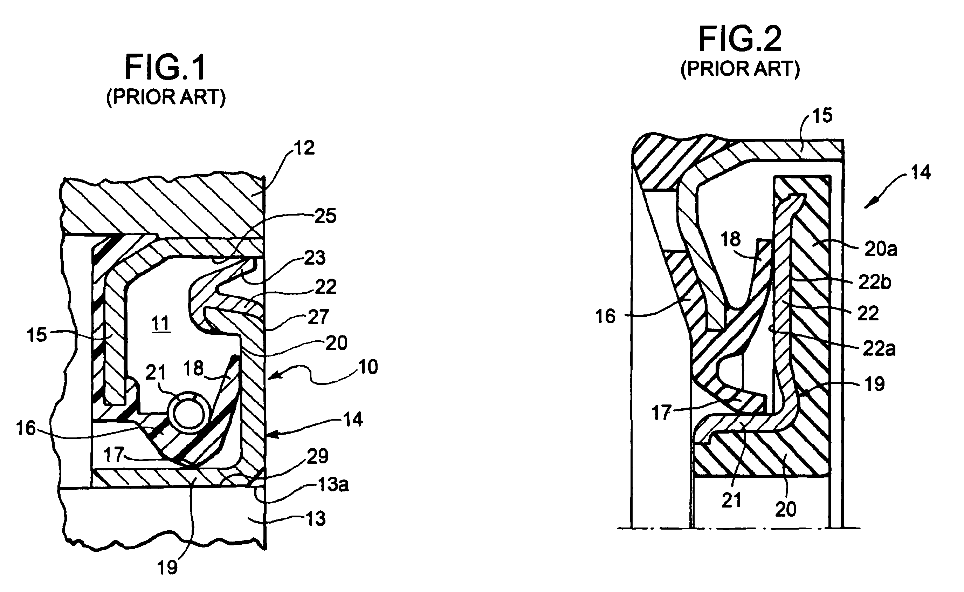

Figures 1 and 2 are axial cross-sectional views of two sealing devices of conventional design; and
Figure 3 is an axial cross-sectional view of an embodiment of a combined sensing and sealing device according to the present invention.

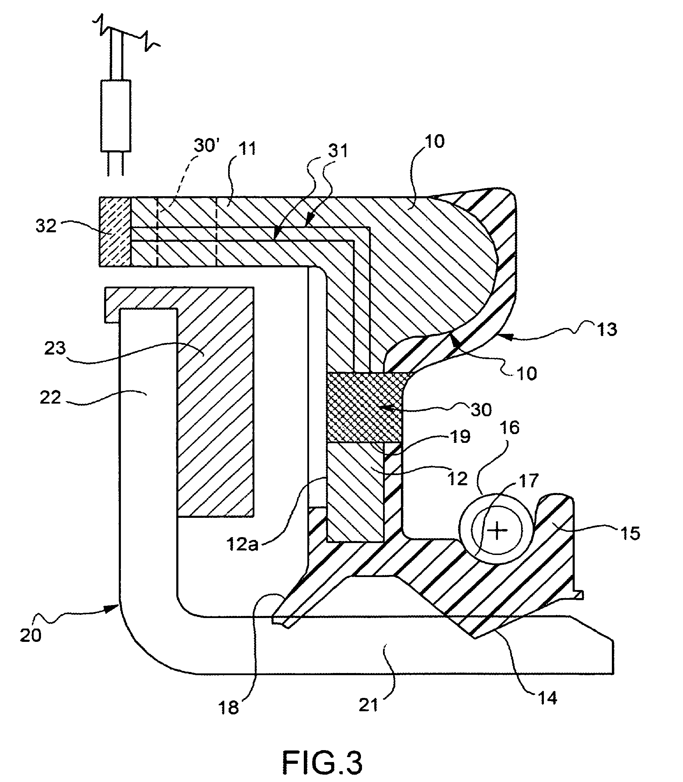

With reference to Figure 3, a cassette-type sealing device in accordance with the present invention includes a pair of annular shields or inserts, namely a rigid insert 10 fixable to the stationary race (not shown) of a bearing unit and a further, conventional metallic shield or flinger 20 fixable to the rotatable bearing race. In the preferred embodiment shown in Figure 3, the stationary insert 10 has a substantially L-shaped axial cross section with a cylindrical axial portion 11 to be fixed to a coaxial, cylindrical surface of the stationary bearing race, and a radial wall portion 12 extending towards the flinger 20.

Over-moulded or vulcanized onto the radial wall portion 12 is a sealing gasket 13 of rubber or elastomeric material providing a main lip 14 slidingly contacting the cylindrical portion 21 of the flinger 20. The main lip 14 is formed by an end portion or rim 15 of the gasket 13 extending axially inwardly from the free end of the radial wall portion 12 of the stationary insert 10. The lip 14 is radially urged against the cylindrical portion 21 of the flinger by means of a thin circumferential spring 16 seated in a circumferential groove 17 formed on the side of rim 15 opposite to the lip 14. It is to be noted that the gasket 13 is shown in its non-deformed condition. Owing to this arrangement, the spring 16 is located on the internal and protected side of the seal, in the same lubricated environment of the rolling bodies (usually balls or rollers) of the bearing unit. The gasket 13 may form further sealing lips such as a radial lip 18 intended to radially contact the cylindrical portion 21 of the flinger.

The flinger 20 has a conventional, substantially L-shaped cross section with the cylindrical axial portion 21 to be fixed onto a coaxial, cylindrical surface of the rotating bearing race, and a radial wall portion 22 extending radially outwardly from the axially outer end of cylindrical portion 21 towards the opposite bearing race. In this example, the sealing device is designed for a bearing unit with a stationary outer race and a rotatable inner race. Those skilled in the art will recognize that with minor modifications the invention may be adapted for bearing units with a rotatable outer race and a stationary inner race.

A magnetic encoder wheel 23, preferably made of plastoferrite or elastomeric material loaded with a high content of ferrite is moulded onto or fixed in other ways to the radial wall of the flinger. The encoder is conveniently located on the axially inward face of the radial wall 22, so as to be protected from damages caused by stones, pebbles, dirt and metal particles originated from the near brake.

The stationary insert 10 forms a bore or recess 19 for retaining a sensor body 30. This sensor body incorporates a magneto-electric transducer (not shown in detail) operatively facing the associated magnetic encoder 23. According to the invention; the whole insert 10 is made of plastic, the stiffness of which can guarantee the proper functioning of the sealing device. As shown, the sensor body 30 is preferably flush with the axially outer surface 12a of the stationary insert so as to reduce the risk of being damaged as if it were instead projecting therefrom. Since the main lip 14 is located at the inner side of the seal, the sensor body and the encoder may be fitted very close to each other, thereby making the whole device very compact in an axial direction whilst ensuring hermetic sealing action. Polluting agents are prevented from entering the bearing and at the same time the lubricant grease is sealed within the inner ambient of the bearing. It will be noted that the sensor and the encoder operate in a grease-free environment, and that a thin radial gap at the free end of the flinger provides a labyrinth sealing action protecting also the encoder and the sensor from external deleterious agents. Due to the axially inner location of the main lip 14, the encoder and the sensor cannot be reached by metal particles resulting from brinelling or spalling of the bearing surfaces where the rollers or balls contact the bearing races. Further, the encoder and the sensor cannot be reached by softer but still potentially damaging particles, for instance plastic fragments of components such as cages for the rolling bodies.

Embedded in the plastic material of the stationary insert 10 are also wires 31 connecting the sensor 30 to a connector 32 in order to feed the sensor and transmit the output signals from the sensor to an electronic processing unit mounted on board of the vehicle.

The invention is not intended to be limited to the embodiment described and illustrated herein, which should be considered as an example of an embodiment of the combined sealing and sensing device. Rather, the invention may be modified with regard to the shape, size and arrangement of parts, to constructional and functional details and materials being used. For example, in a less preferred embodiment of the invention, the sensor body may be fitted at a location depicted in phantom at 30' in Figure 3, facing the encoder in a radial direction.

## Claims

1. A combined device for sealing the annular gap and sensing relative rotation between the stationary and rotatable races of a bearing unit, the device including:
a first annular shield or flinger (20) fixable to the rotatable bearing race,
a magnetised encoder wheel (23) fixed to an axially inward face of a radial wall (22) of the flinger (20),
a second annular insert (10) fixable to the stationary bearing race and supporting
- a sealing gasket (13) with at least one sealing lip (14) including a main lip (14) formed by an end portion or rim (15) of the gasket (13) protruding from a free end of a radial wall portion (12) of the stationary insert (10) and slidingly contacting the flinger (20), and
- a sensor (30), embedded in the stationary insert (10), operatively facing the encoder (23) for detecting rotation thereof,
**characterised in that** the radial wall portion (12) of the stationary insert (10) is placed axially inwardly from the radial wall (22) of the flinger (20) and the main sealing lip (14) extends axially inwardly from said free end, **in that** the whole stationary insert is made from a relatively stiff plastic material, and **in that** electric conducting means (31) connecting the rotation sensor (30) to an electrical connector device (32) in order to feed the sensor (30) and transmit the output signals from the sensor (30) to an electronic processing unit mounted on board of the vehicle are embedded in the plastic material of the stationary insert (10).

2. A combined device according to claim 1, wherein
the flinger (20) has a substantially L-shaped axial cross section with a cylindrical axial portion (21) and a radial wall portion (22) extending radially outwardly from an axially outer end of cylindrical portion (21) towards the opposite annular insert (10),
**characterised in that**
the encoder (23) extends over an axially inward face of the radial wall (22) of the flinger (20), and
the sensor (30) is embedded in the radial wall portion (12) of the annular insert (10) parallel to and axially facing closely the encoder wheel (23).

3. A combined device according to claim 2, **characterised in that** the sensor (30) does not protrude axially beyond an axially outer surface (12a) of the radial wall portion (12) of the annular insert (10).

4. A combined device according to claim 3, **characterised in that** the sensor (30) is incorporated in a sensor body having a face which is substantially flush with said axially outer surface (12a) of the stationary insert (10).

5. A combined device according to claim 1, **characterized in that** the main lip (14) is radially urged against a cylindrical portion (21) of the flinger by means of a circumferential spring (16) located on a side of the rim (15) opposite to the main lip (14).

6. A bearing unit comprising a combined sealing device according to any one of the preceding claims.

7. A bearing unit according to claim 6, for supporting the hub of at least one wheel of a transportation means or vehicle.

## Patentansprüche

1. Kombinierte Vorrichtung zum Abdichten des ringförmigen Spalts und Detektieren einer relativen Drehung zwischen dem feststehenden und dem drehbaren Laufring einer Lagereinheit, wobei die Vorrichtung Folgendes umfasst:
einen ersten ringförmigen Schild oder Schleuderring (20), der an dem drehbaren Lagerring fixierbar ist,
ein magnetisiertes Codiererrad (23), das an einer axial nach innen gerichteten Fläche einer radialen Wand (22) des Schleuderrings (20) befestigt ist,
ein zweiter ringförmiger Einsatz (10), der an dem feststehenden Laufring fixierbar ist und der Folgendes trägt:
- einen Dichtungsring (13) mit mindestens einer Dichtungslippe (14), die eine Hauptlippe (14) enthält, die durch einen Endabschnitt oder einen Rand (15) des Dichtungsrings (13) gebildet ist, der von einem freien Ende eines Abschnitts der radialen Wand (12) des feststehenden Einsatzes (10) vorsteht, und die den Schleuderring (20) gleitend berührt, und
- einen Sensor (30), der in den feststehenden Einsatz (10) eingebettet ist, der dem Codierer (23) funktionstechnisch gegenüberliegt, um seine Drehung zu detektieren,
**dadurch gekennzeichnet, dass** der Abschnitt der radialen Wand (12) des feststehenden Einsatzes (10) von der radialen Wand (22) des Schleuderrings (20) axial einwärts positioniert ist und die Hauptlippe (14) sich von dem freien Ende axial einwärts erstreckt, dass der gesamte feststehende Einsatz aus einem relativ steifen Kunststoffmaterial besteht, und dass elektrische Leitungsmittel (31), die den Drehsensor (30) an eine elektrische Anschlussvorrichtung (32) anschließen, um den Sensor (30) anzutreiben und die Ausgabesignale des Sensors (30) an eine elektronische Verarbeitungseinheit, die an Bord des Fahrzeuges angebracht ist, zu übermitteln, in das Kunststoffmaterial des feststehenden Einsatzes (10) eingebettet sind.

2. Kombinierte Vorrichtung nach Anspruch 1, wobei der Schleuderring (20) einen im Wesentlichen L-förmigen axialen Querschnitt mit einem zylinderförmigen axialen Abschnitt (21) und einen radialen Wandabschnitt (22), der sich von einem axial äußeren Ende des zylindrischen Abschnitts (21) radial auswärts in Richtung des gegenüberliegenden ringförmigen Einsatzes (10) erstreckt, aufweist,
**dadurch gekennzeichnet, dass**
sich der Codierer (23) über eine axial innere Fläche der radialen Wand (22) des Schleuderrings (20) erstreckt, und
der Sensor (30) in einen Abschnitt der radialen Wand (12) des ringförmigen Einsatzes (10) parallel zu dem Codiererrad (23) und diesem axial eng zugewandt eingebettet ist.

3. Kombinierte Vorrichtung nach Anspruch 2, **dadurch gekennzeichnet, dass** der Sensor (30) nicht über eine axial äußere Fläche (12a) des Abschnitts (12) der radialen Wand des ringförmigen Einsatzes (10) hinaus vorsteht.

4. Kombinierte Vorrichtung nach Anspruch 3, **dadurch gekennzeichnet, dass** der Sensor (30) in einen Sensorkörper eingebaut ist, der eine Fläche aufweist, die im Wesentlichen mit der axialen Außenfläche (12a) des feststehenden Einsatzes (10) bündig ist.

5. Kombinierte Vorrichtung nach Anspruch 1, **dadurch gekennzeichnet, dass** die Hauptlippe (14) anhand einer umlaufenden Feder (16), die sich auf einer Seite der Kante (15) gegenüber der Hauptlippe (14) befindet, radial gegen einen zylindrischen Abschnitt (21) des Schleuderrings gedrängt ist.

6. Lagereinheit, die eine kombinierte Dichtungsvorrichtung nach einem der vorstehenden Ansprüche umfasst.

7. Lagereinheit nach Anspruch 6, um die Nabe wenigstens eines Rades eines Beförderungsmittels oder eines Fahrzeuges zu tragen.

## Revendications

1. Dispositif combiné pour rendre étanche l'espace annulaire et pour détecter la rotation rotative entre la bague fixe et la bague rotative d'un roulement, ce dispositif comprenant :
un premier flasque ou déflecteur annulaire (20) pouvant être fixé à la bague de roulement rotative,
une roue codeuse magnétisée (23) fixée à une face axialement vers l'intérieur d'une paroi radiale (22) du déflecteur (20),
une deuxième pièce rapportée annulaire (10) pouvant être fixée à la bague de roulement fixe et supportant
- une garniture d'étanchéité (13) avec au moins une lèvre d'étanchéité (14) comprenant une lèvre principale (14) formée par une partie extrême ou rebord (15) de la garniture d'étanchéité (13) faisant saillie depuis une extrémité libre d'une partie paroi radiale (12) de la pièce rapportée fixe (10) et entrant en contact glissant avec le déflecteur (20), et
- un capteur (30), encastré dans la pièce rapportée fixe (10), faisant face au codeur (23) de manière opérationnelle pour détecter la rotation de celui-ci,
**caractérisé en ce que** la partie paroi radiale (12) de la pièce rapportée fixe (10) est placée axialement vers l'intérieur par rapport à la paroi radiale (22) du déflecteur (20) et la lèvre d'étanchéité principale (14) s'étend axialement vers l'intérieur depuis ladite extrémité libre, **en ce que** la totalité de la pièce rapportée fixe est faite à partir d'une matière plastique relativement rigide, et **en ce que** les moyens de conduction électrique (31), connectant le capteur de rotation (30) à un dispositif connecteur électrique (32) afin d'alimenter le capteur (30) et de transmettre les signaux de sortie du capteur (30) à une unité de traitement électronique montée à bord du véhicule, sont encastrés dans la matière plastique de la pièce rapportée fixe (10).

2. Dispositif combiné selon la revendication 1, dans lequel
le déflecteur (20) a une coupe transversale axiale essentiellement en forme de L avec une partie axiale cylindrique (21) et une partie paroi radiale (22) s'étendant radialement vers l'extérieur depuis une extrémité axialement extérieure de la partie cylindrique (21) vers la pièce rapportée annulaire (10) opposée,
**caractérisé en ce que**
le codeur (23) s'étend au-dessus d'une face axialement vers l'intérieur de la paroi radiale (22) du déflecteur (20), et
le capteur (30) est encastré dans la partie paroi radiale (12) de la pièce rapportée fixe (10), parallèle à la roue codeuse (23) et faisant face axialement à celle-ci de manière proche.

3. Dispositif combiné selon la revendication 2, **caractérisé en ce que** le capteur (30) ne fait pas saillie axialement au-delà d'une surface axialement extérieure (12a) de la partie paroi radiale (12) de la pièce rapportée annulaire (10).

4. Dispositif combiné selon la revendication 3, **caractérisé en ce que** le capteur (30) est incorporé dans un corps de capteur ayant une face qui est essentiellement au ras de ladite surface axialement extérieure (12a) de la pièce rapportée fixe (10).

5. Dispositif combiné selon la revendication 1, **caractérisé en ce que** la lèvre principale (14) est poussée radialement contre une partie cylindrique (21) du déflecteur au moyen d'un ressort circonférentiel (16) situé sur un côté du rebord (15) opposé à la lèvre principale (14).

6. Roulement comprenant un dispositif d'étanchéité combiné selon l'une quelconque des revendications précédentes.

7. Roulement selon la revendication 6, pour supporter le moyeu d'au moins une roue d'un moyen de transport ou d'un véhicule.
